(19) Europäisches Patentamt
European Patent Office
Office européen des brevets

(11) **EP 3 078 486 B1**

(12) **EUROPEAN PATENT SPECIFICATION**

(45) Date of publication and mention
of the grant of the patent:
**30.10.2019 Bulletin 2019/44**

(51) Int Cl.:
*B32B 5/28* *(2006.01)*    *C08J 5/24* *(2006.01)*
*B32B 5/22* *(2006.01)*    *B32B 7/02* *(2019.01)*
*B32B 3/26* *(2006.01)*    *B32B 5/26* *(2006.01)*
*B32B 27/12* *(2006.01)*   *B32B 27/20* *(2006.01)*

(21) Application number: **14867585.3**

(22) Date of filing: **02.12.2014**

(86) International application number:
**PCT/JP2014/081885**

(87) International publication number:
**WO 2015/083707 (11.06.2015 Gazette 2015/23)**

(54) **FIBER-REINFORCED RESIN LAMINATE**

FASERVERSTÄRKTES KUNSTHARZLAMINAT

STRATIFIÉ EN RÉSINE RENFORCÉ PAR DES FIBRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.12.2013 JP 2013250253**

(43) Date of publication of application:
**12.10.2016 Bulletin 2016/41**

(73) Proprietor: **Mitsubishi Chemical Corporation Tokyo 100-8251 (JP)**

(72) Inventors:
• **NAGASAKA, Masahiko**
**Toyohashi-shi**
**Aichi 440-8601 (JP)**
• **OGASAWARA, Hayato**
**Toyohashi-shi**
**Aichi 440-8601 (JP)**
• **ISHIKAWA, Takeshi**
**Toyohashi-shi**
**Aichi 440-8601 (JP)**

(74) Representative: **Hoffmann Eitle**
**Patent- und Rechtsanwälte PartmbB**
**Arabellastraße 30**
**81925 München (DE)**

(56) References cited:
EP-A1- 2 127 840        WO-A1-2013/147257
WO-A1-2014/142061      JP-A- H03 138 146
JP-A- H07 156 341       JP-A- H07 196 822
JP-A- 2000 108 236      JP-A- 2008 207 545
JP-A- 2010 018 724      JP-A- 2013 208 725
JP-A- 2014 189 722      JP-A- 2015 003 504

**Description**

TECHNICAL FIELD

The present invention relates to a fiber-reinforced resin, and relates to a fiber-reinforced resin laminate which is inexpensive and has an excellent balance between moldability and mechanical characteristics. More particularly, the invention relates to a fiber-reinforced resin laminate which has excellent shapeability into a complicated shape at the time of stamping molding, can be molded in a short period of time, maintains mechanical strength as a structural member, and is suitably used for, for example, aircraft members, automotive members, and sports goods.

The present application claims priority on Japanese Patent No. 2013-250253 filed in Japan on December 3, 2013.

BACKGROUND ART

Carbon fiber-reinforced thermoplastic resins formed from carbon fibers and thermoplastic resins have excellent specific strength and specific rigidity, and are therefore widely used for electrical and electronic applications, civil engineering and construction applications, automotive applications, aircraft applications, and the like. Regarding the method for molding a fiber-reinforced thermoplastic resin, stamping molding by which a fiber-reinforced thermoplastic resin is shaped into an intended shape by laminating an intermediate substrate called prepreg, which is obtained by impregnating continuous reinforcing fibers with a thermoplastic resin, and heating and pressurizing the fiber-reinforced resin with a press or the like, is most generally carried out. A molded body of a fiber-reinforced resin obtained thereby has excellent mechanical properties since continuous reinforcing fibers are used therein. Furthermore, continuous reinforcing fibers can be designed to have required mechanical properties by being arranged regularly, and the mechanical properties have less variation. However, since the reinforcing fibers are continuous reinforcing fibers, the reinforcing fibers have low fluidity, and therefore, it is difficult to form a complicated shape such as a three-dimensional shape. Thus, the applications of fiber-reinforced resins are limited mainly to members having a shape close to a planar shape. Thus, there has been a demand for further improvements.

Furthermore, in recent years, for the purpose of increasing the production efficiency, LFT-D molding by which reinforcing fibers are directly sent in to a screw unit of a molding machine, cutting and dispersing of the fibers are simultaneously carried out, and then injection molding or extrusion molding is carried out, has also been implemented. According to this method, since the reinforcing fibers are cut to an appropriate length, the reinforcing fibers can easily flow and can also conform to complicated shapes such as a three-dimensional shape. However, since LFT-D causes unevenness in the fiber length or unevenness in the fiber distribution during the cutting and dispersing processes, there is a problem that the mechanical properties are deteriorated, or values of those properties vary widely.

In order to compensate for the shortcomings of a material such as described above, there have been disclosed base materials which are made to exhibit excellent shapeability at the time of molding and to exhibit excellent mechanical properties when molded into a molded product of a fiber-reinforced resin, by inserting incisions into a prepreg formed from continuous fibers and a resin (for example, Patent Documents 1, 2, and 3). However, although these base materials have superior mechanical characteristics and smaller variations of the characteristics compared to LFT-D, these base materials are not considered to have sufficient strength in order to be applied as structural materials.

Furthermore, in regard to Patent Document 3, the base material has sufficient strength that is appropriate for a structural material; however, the material requires a long molding cycle and has a problem with mass productivity.

Furthermore, methods of ameliorating the strength described above or variations thereof by optimizing the shape of incisions have been disclosed (for example, Patent Documents 4, 5 and 6). According to this method, amelioration in the mechanical characteristics and variations thereof can be achieved; however, since the material has insufficient stamping moldability, the material has a problem of poor shapeability into three-dimensional shapes such as ribs and hubs.

Further prior art documents include the following:
Patent Document 7 describes a prepreg base material which comprises many reinforcing fibers arranged in one direction and a matrix resin present among the many reinforcing fibers. The prepreg base material has, throughout the whole surface, many incisions each extending in a direction crossing the reinforcing fibers, substantially all of the reinforcing fibers having been divided by one or more of the incisions. The reinforcing fiber segments formed by division by the incisions have a length (L) of 10-100 mm. The prepreg base material has a thickness (H) of 30-300 $\mu$m, and the content by volume (Vf) of the reinforcing fibers in the prepreg base material is 45-65%.

Patent Document 8 describes a carbon fibre thermoplastic resin prepreg which is a carbon fibre prepreg obtained by impregnating a PAN-based carbon fibre in which the average fibre fineness of a single fibre is 1.0 dtex to 2.4 dtex with a thermoplastic resin, wherein the thermoplastic resin satisfies $20 \leq (FM/FS) \leq 40$ (where FM: flexural modulus (MPa) of a resin sheet comprising only the thermoplastic resin, and FS: flexural strength (MPa) of the resin sheet), a method for manufacturing the same, and a carbon fibre composite material employing the carbon fibre prepreg.

Patent Document 9 describes a laminated body that includes: a random sheet molded body in which a chopped tape of a carbon fiber prepreg made of carbon fibers having a single fiber fineness of 1.0-2.4 dtex and a thermoplastic resin matrix is dispersed randomly; and a unidirectional sheet molded body in which a carbon fiber prepreg is disposed in one direction. In this structure, the random sheet molded body is disposed at least on one surface.

CITATION LIST

PATENT DOCUMENT

Patent Document 1: JP 63-247012 A
Patent Document 2: JP 63-267523 A
Patent Document 3: JP 2010-18724 A
Patent Document 4: JP 2008-207544 A
Patent Document 5: JP 2008-207545 A
Patent Document 6: JP 2009-286817 A
Patent Document 7: EP 2 127 840 A1
Patent Document 8: WO 2013/147257 A1
Patent Document 9: JP 2013208725

SUMMARY OF THE INVENTION

PROBLEM TO BE SOLVED BY THE INVENTION

The present invention is intended to solve the problems associated with the prior art technologies such as described above, and it is an object of the invention to provide a fiber-reinforced resin laminate which has excellent mechanical characteristics applicable to structural materials, with less variation in the mechanical characteristics, and has excellent shapeability into complicated shapes, and which is inexpensive and enables molding in a short period of time.

MEANS FOR SOLVING PROBLEM

The inventors of the present invention repeatedly conducted thorough investigations in order to solve the problems described above, and as a result, the inventors found that when a laminate having at least a two-layer structure in which layer (A) having excellent mechanical characteristics and layer (B) having excellent stamping moldability are alternately superposed is used, a fiber-reinforced resin laminate which is inexpensive and has an excellent balance between moldability and mechanical characteristics is obtained.

The gist of the present invention lies in the following items [1] to [14].

[1] A fiber-reinforced resin laminate having the following layer (A) and the following layer (B) laminated together, for which the value obtained by dividing the sum total of the thickness of the layer (A) by the sum total of the thickness of the layer (B) is from 0.5 to 3.0:

layer (A): a laminate formed from a prepreg having reinforcing fibers impregnated with resin (a) or resin composition (a), the product of the square of the volume percentage content Vf of the reinforcing fibers and the average fiber length La (mm) being more than 2.0 mm and 15 mm or less; and
layer (B): a sheet formed from a filler-containing resin composition including resin (c) and a filler, the product of the square of the volume percentage content Vf of the filler and the average value Lb (mm) of the maximum length of the filler being 2.0 mm or less.

[2] The fiber-reinforced resin laminate according to [1], wherein the following expression (1) is satisfied:

$$0.85 \leq A1/B1 \leq 4.0 \ldots \text{Expression (1)}$$

A1: absolute value of the complex viscosity $\eta^*$ of the layer (A) at a temperature of (softening point or melting point of resin (a) that forms the layer (A) + 40°C), and

B1: absolute value of the complex viscosity η* of the layer (B) at a temperature of (softening point or melting point of resin (a) that forms the layer (A) + 40°C)

wherein the complex viscosity η* is a value measured by a parallel plate method using a rotational rheometer under the conditions of a rotating plate diameter of 25 mm and an angular frequency of 100 rad/sec.

[3] The fiber-reinforced resin laminate according to [1] or [2], wherein the value obtained by dividing the sum total of the thickness of the layer (A) by the sum total of the thickness of the layer (B) is from 1.0 to 2.0.

[4] The fiber-reinforced resin laminate according to any one of [1] to [3], wherein the resin that constitutes the layer (A) and/or layer (B) is a thermoplastic resin.

[5] The fiber-reinforced resin laminate according to any one of [1] to [4], wherein the prepreg forming the layer (A) has incisions each having a depth that cuts the reinforcing fibers in a direction that traverses the length direction of the reinforcing fibers.

[6] The fiber-reinforced resin laminate according to [5], wherein the incisions of the prepreg forming the layer (A) have a straight line shape, the angle formed by the incision and the length direction of the reinforcing fibers is from 30° to 60°, and the sum total of the length of the incisions per 1 m$^2$ of the prepreg is from 20 m to 150 m.

[7] The fiber-reinforced resin laminate according to any one of [1] to [6], wherein the average fiber length of the reinforcing fibers of in the layer (A) is from 10 mm to 50 mm.

[8] The fiber-reinforced resin laminate according to any one of [1] to [7], wherein one layer (B) is laminated between one layer (A) and another layer (A).

[9] The fiber-reinforced resin laminate according to any one of [1] to [8], wherein the fiber-reinforced resin laminate is obtained by fusing the layer (A) and the layer (B) by heating the layers to a temperature higher than or equal to the softening point or the melting point of the resin that forms the layer (A) and the resin composition that forms the layer (B).

[10] The fiber-reinforced resin laminate according to any one of [1] to [9], wherein the volume percentage content of the reinforcing fibers in the layer (A) is from 20% to 60%.

[11] The fiber-reinforced resin laminate according to any one of [1] to [10], wherein the reinforcing fibers of the layer (A) are carbon fibers.

[12] The fiber-reinforced resin laminate according to any one of [1] to [11], wherein the filler of the layer (B) is a recycled material.

[13] The fiber-reinforced resin laminate according to any one of [1] to [12], wherein the reinforcing fibers in the layer (A) are carbon fibers having an average single fiber fineness of from 0.5 dtex to 2.4 dtex.

[14] The fiber-reinforced resin laminate according to any one of [1] to [13], wherein the number of filaments in the fiber bundle used for the reinforcing fibers in the layer (A) is from 3,000 to 100,000.

EFFECT OF THE INVENTION

According to the present invention, a fiber-reinforced resin laminate which has excellent mechanical characteristics applicable to structural materials, with less variation in the mechanical characteristics, and has excellent shapeability into complicated shapes, and which is inexpensive and enables molding in a short period of time, can be obtained.

BRIEF DESCRIPTION OF DRAWINGS

Fig. 1 is a perspective view diagram of a mold used in Examples.

Fig. 2 is a perspective view diagram of a molded article of a fiber-reinforced resin laminate, for which the value obtained by dividing the sum total of the thickness of layer (A) by the sum total of the thickness of layer (B) is more than 3.0.

Fig. 3 is a perspective view diagram of a molded article of a fiber-reinforced resin laminate, for which the value obtained by dividing the sum total of the thickness of layer (A) by the sum total of the thickness of layer (B) is from 0.5 to 3.0.

Fig. 4 is a perspective view diagram of a molded article of a fiber-reinforced resin laminate, for which the value obtained by dividing the complex viscosity of layer (A) by the complex viscosity of layer (B) is more than 4.0.

Fig. 5 is a perspective view diagram of a molded article of a fiber-reinforced resin laminate, for which the value obtained by dividing the complex viscosity of layer (A) by the complex viscosity of layer (B) is less than 0.85.

Fig. 6 is a perspective view diagram of a molded article of a fiber-reinforced resin laminate, for which the value obtained by dividing the complex viscosity of layer (A) by the complex viscosity of layer (B) is from 0.85 to 4.0.

Fig. 7 is a diagram illustrating an example of the prepreg used in the present invention.
Fig. 8 is a photograph of the molded article obtained in Example 1.

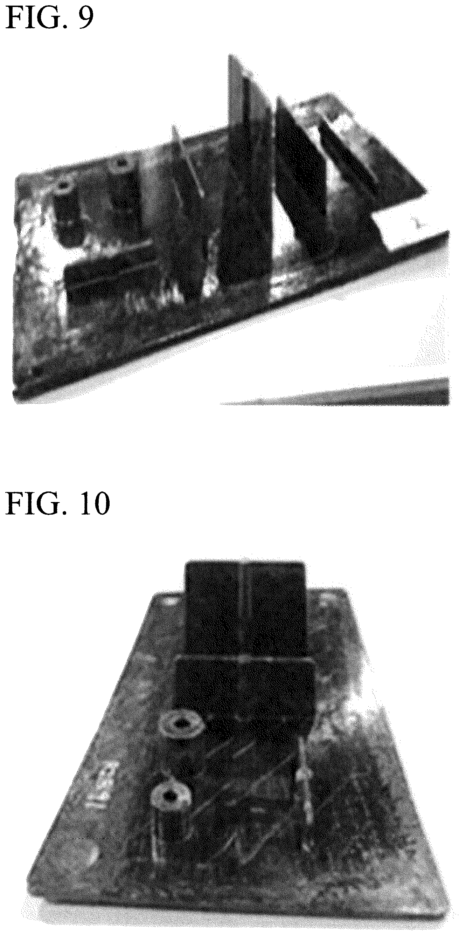

Fig. 9 is a photograph of the molded article obtained in Example 2.
Fig. 10 is a photograph of the molded article obtained in Example 3.

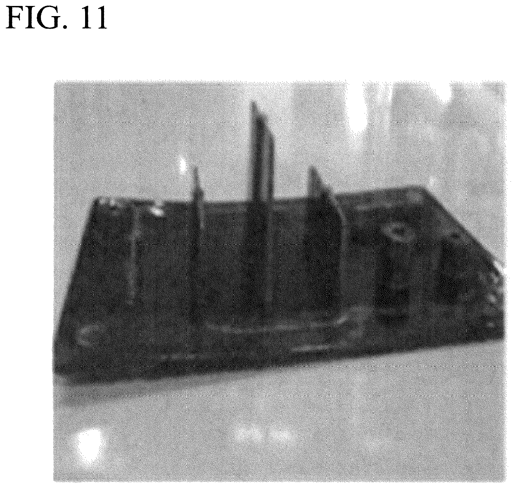

Fig. 11 is a photograph of the molded article obtained in Example 4.

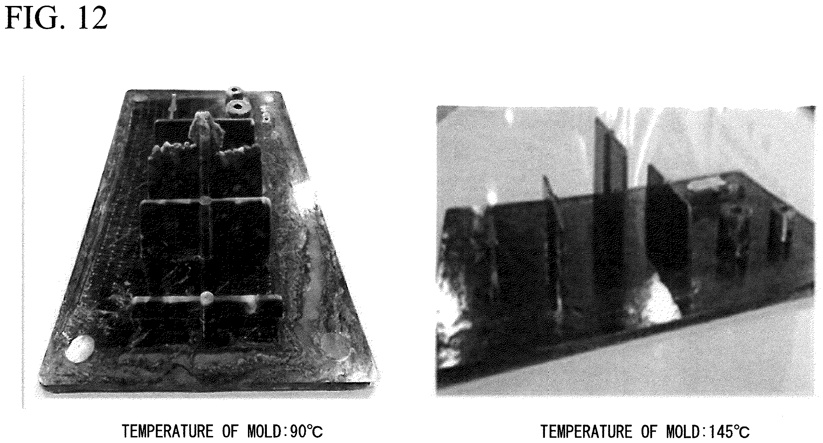

Fig. 12 is a photograph of the molded article obtained in Example 5.

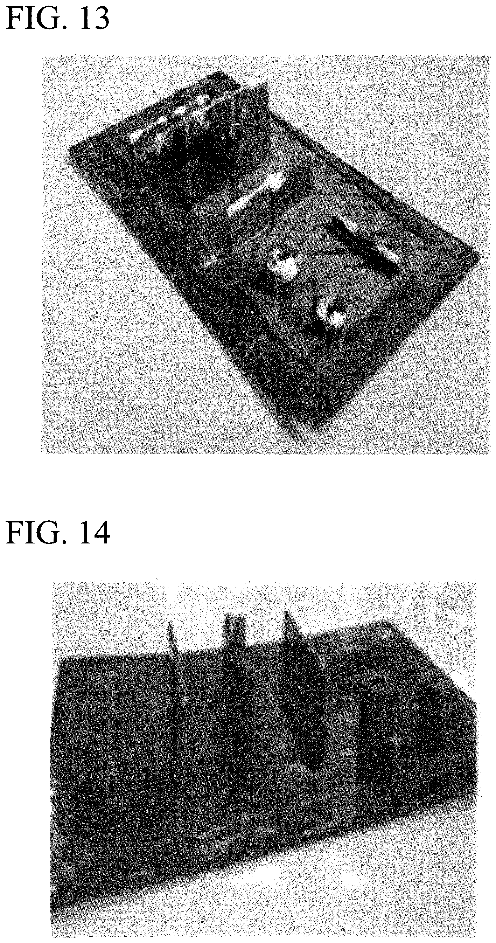

Fig. 13 is a photograph of the molded article obtained in Example 6.
Fig. 14 is a photograph of the molded article obtained in Comparative Example 1.

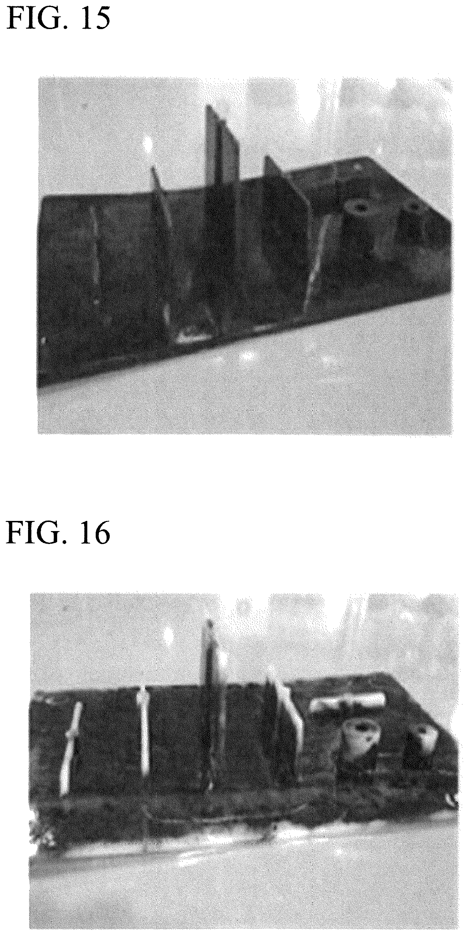

Fig. 15 is a photograph of the molded article obtained in Comparative Example 2.
Fig. 16 is a photograph of the molded article obtained in Comparative Example 3.

MODE(S) FOR CARRYING OUT THE INVENTION

Hereinafter, the fiber-reinforced resin laminate of the present invention and a method for producing the same will be described in detail.

The present invention is a fiber-reinforced resin laminate having the following layer (A) and the following layer (B) laminated together, for which the value obtained by dividing the sum total of the thickness of the layer (A) by the sum total of the thickness of the layer (B) is from 0.5 to 3.0:

layer (A): a laminate formed from a prepreg having reinforcing fibers impregnated with resin (a), or with resin composition (a), the product of the square of the volume percentage content Vf of the reinforcing fibers and the average fiber length La (mm) being more than 2.0 mm and 15mm or less; and

layer (B): a sheet formed from a filler-containing resin composition including resin (c) and a filler, the product of the square of the volume percentage content Vf of the filler and the average value Lb (mm) of the maximum length of the filler being 2.0 mm or less.

Meanwhile, here, the square of the volume percentage content Vf means the value obtained by squaring the value of Vf(%) $\times$ 1/100, with respect to the volume percentage content Vf represented by volume percentage. For the value of such a volume percentage content, for example, a value determined using the following formulae, from the density of the prepreg, pc, obtained by a water displacement method; the density of the fibers, pf, obtained by a similar method; the mass of the prepreg, W; and the weight W1 obtained after the prepreg is combusted and the resin is burned down, is used.

$$Wf = (W - W1) \times 100/W \qquad \text{Formula (1)}$$

$$Vf = Wf \times \rho c/\rho f \qquad \text{Formula (2)}$$

(Layer (A))

The layer (A) used in the laminate of the present invention is a laminate formed from a prepreg having reinforcing fibers impregnated with resin (a) or resin composition (a), and the product of the square of the volume percentage content Vf of the reinforcing fibers and the average fiber length, La mm, is more than 2.0 mm and 15 mm or less. The product is more preferably 3 to 7.

It is necessary to use a laminate formed from a prepreg having reinforcing fibers impregnated with resin (a) or resin composition (a), for the layer (A) that can be used in the laminate of the present invention. The reinforcing fibers (volume percentage content of the reinforcing fibers Vf) included in the prepreg is preferably 20% to 60% by volume, and more preferably 30% to 50% by volume, relative to the volume of the prepreg. The fiber volume percentage content can be measured in the order of formula (1) and formula (2). The thickness of the prepreg is not particularly limited; however, from the viewpoint of acquiring shapeability and a strength increasing effect in combination, the thickness is preferably 50 $\mu$m to 300 $\mu$m, and more preferably 100 $\mu$m to 200 $\mu$m. The thickness of a prepreg can be measured using the average value of measurement values obtained by making measurement at arbitrary plural sites in the prepreg with a micrometer. The thickness of a laminate formed from a prepreg is preferably 1 mm to 4 mm, and more preferably 1.5 mm to 3.0 mm.

The flexural modulus of the layer (A) is usually 5 GPa to 100 GPa, and preferably 10 GPa to 50 GPa. If the flexural modulus is too high, stamping moldability is decreased, and if the flexural modulus is too low, mechanical characteristics are deteriorated. Such flexural modulus can be measured based on JIS K7074. That is, a three-point bending test can be carried out by placing a test specimen having a width of 25 mm and a length of 100 mm on a support having a size of R2 mm at a gauge length of 80 mm, and performing the test at a crosshead speed of 5 mm/min using an indenter having a size of R5 mm.

(Resin)

The resin (a) that constitutes the layer (A) used in the present invention may be, for example, a thermosetting resin or a thermoplastic resin. From the viewpoint of molding cycle or handling, a thermoplastic resin is preferred. Examples of the thermosetting resin include thermosetting resins such as an epoxy resin, an unsaturated polyester resin, a vinyl ester resin, a phenolic resin, an epoxy acrylate resin, a urethane acrylate resin, a phenoxy resin, an alkyd resin, a urethane resin, a maleimide resin, and a cyanate resin. Examples of the thermoplastic resin include styrene-based resins such as thermoplastic resins such as polystyrene, a (meth)acrylic acid ester/styrene copolymer, an acrylonitrile/styrene copolymer, a styrene/maleic anhydride copolymer, ABS, ASA, and AES; acrylic resins such as polymethyl methacrylate; polycarbonate-based resins; polyamide-based resins; polyester-based resins such as polyethylene terephthalate and polybutylene terephthalate; polyphenylene ether-based resins; polyoxymethylene-based resins; polysulfone-based resins; polyallylate-based resins; polyphenylene sulfide-based resins; thermoplastic polyurethan-ebased resins; polyolefin-based resins such as polyethylene, polypropylene, polybutene, poly-4-methylpentene, an ethylene/propylene copolymer, and an ethylene/butene copolymer; copolymers of $\alpha$-olefins and various monomers, such as an ethylene/vinyl acetate copolymer, an ethylene/(meth)acrylic acid ester copolymer, an ethylene/maleic anhydride copolymer, and an ethylene/acrylic acid copolymer; aliphatic polyester-based resins such as polylactic acid, polycaprolactone, and an aliphatic glycol/aliphatic dicarboxylic acid copolymer; and biodegradable resins such as biodegradable cellulose, a polypeptide, polyvinyl alcohol, starch, carrageenan, and chitinaceous/chitosan materials. From the viewpoints of strength and processability, a crystalline resin having a relatively high degree of crystallinity is preferred, and a polyamide-based resin and a polyolefin-based resin are more preferred. Specific examples of the polyamide-based resin include nylon 6 and nylon 66, and among them, nylon 6 is preferred. Above all, the polyolefin-based resin is preferably polypropylene (acid-modified polypropylene).

(Resin additives)

In addition to the resin (a), if necessary, resin composition (a) can be prepared by further incorporating various resin additives. Examples of the resin additives include a colorant, an oxidation inhibitor, a metal inactivating agent, carbon black, a nucleating agent, a mold release agent, a lubricating agent, an antistatic agent, a photostabilizer, an ultraviolet absorber, an impact resistance improver, a melt tension improver, and a flame retardant.

The viscosity of the matrix resin (resin a) that constitutes the layer (A) is usually 0.01 Pa·s to 1,000 Pa·s, and preferably 0.5 Pa·s to 500 Pa·s. If the viscosity is too high, the density distribution of carbon fibers in the molded article after stamping molding becomes non-uniform, and the sufficient mechanical characteristics required from a structure are not obtained. Also, if the viscosity is too low, mechanical properties are deteriorated. Such viscosity is a value measured by a parallel plate method using a rotational rheometer (ARES; manufactured by TA Instruments, Inc.). More particularly, the dynamic viscoelasticity is measured under the conditions of a rotating plate diameter of 25 mm, an angular frequency of 100 rad/sec, and a temperature of (softening point or melting point + 40°C).

(Reinforcing fibers)

In regard to the reinforcing fibers that can be used for the prepreg included in the fiber-reinforced resin laminate of the invention, the kind of the reinforcing fibers is not particularly limited, and inorganic fibers, organic fibers, metal fibers, or reinforcing fibers having a hybrid configuration combining those fibers can be used. Examples of the inorganic fibers include carbon fibers, graphite fibers, silicon carbide fibers, alumina fibers, tungsten carbide fibers, boron fibers, and glass fibers. Examples of the organic fibers include aramid fibers, high-density polyethylene fibers, and other general nylon fibers, and polyesters. Examples of the metal salts include fibers of stainless steel and iron, and carbon fibers coated with a metal may also be used. Among these, carbon fibers are preferred in consideration of mechanical characteristics such as strength of the final molded product. Furthermore, the average fiber diameter of a single fiber of the reinforcing fibers is preferably 1 $\mu$m to 50 $\mu$m, and more preferably 5 $\mu$m to 20 $\mu$m. Here, the diameter means the diameter of a cross-section generated when a single fiber of the reinforcing fibers is cut in a direction perpendicular to the length direction. The average fiber diameter can be measured by the following method.

<Measurement of average fiber diameter>

For a sample, any arbitrary twenty single fiber cross-sections from five sheets of SEM photographs are selected, provided that three or more cross-sections are selected from one sheet of photograph, and the outer shape of each fiber cross-section is traced using an image analysis software program (manufactured by Nippon Roper K.K., product name: IMAGE-PRO PLUS). Thus, the major axis of the cross-section (maximum Feret diameter) d is measured. The average of all the major axes d of the selected single fiber cross-sections is designated as the diameter Di of a single fiber of the carbon fiber bundle.

The number of filaments in a fiber bundle used for the reinforcing fibers is preferably 3,000 to 100,000, and more preferably 3,000 to 60,000.

(Carbon fibers)

There are no particular limitations on the carbon fibers, and any one of polyacrylonitrile (PAN)-based, petroleum/coal pitch-based, rayon-based, and lignin-based carbon fibers can be used. Particularly, PAN-based carbon fibers that are produced using PAN as a raw material are preferred because these fibers exhibit excellent productivity and mechanical characteristics in an industrial scale. These can be purchased as commercially available products.

The total fineness of the carbon fiber bundle is preferably 200 to 7,000 tex. The number of filaments is preferably 1,000 to 100,000, and more preferably 3,000 to 60,000. The strength as the carbon fiber bundle is preferably 1 GPa to 10 GPa, and more preferably 5 GPa to 8 GPa. The elastic modulus is preferably 100 GPa to 1,000 GPa, and more preferably 200 GPa to 600 GPa.

Meanwhile, the strength and the elastic modulus of a carbon fiber bundle refer to the strength and elastic modulus measured by the method of JIS R7608. Specifically, the strength and the elastic modulus can be measured by the following procedure.

As a resin formulation, 3,4-epoxycyclohexylmethyl 3,4-epoxycyclohexanecarboxylate/boron trifluoride monoethylamine/ethanol = 100/3/4 (parts by mass) are used, and regarding the curing conditions, normal pressure, 130°C, and 30 minutes are used. Measurement is made for ten strands of a carbon fiber bundle, and the average values are designated as strand tensile strength and strand elastic modulus.

Furthermore, the average single fiber fineness of a fiber bundle of the reinforcing fibers in the layer (A) according to the present invention is not particularly limited; however, the average single fiber fineness is preferably 0.5 dtex to 2.4 dtex. The fineness is more preferably 0.5 dtex to 1.5 dtex. Meanwhile, the average single fiber fineness is a value defined as the mass of a fiber per 10,000 m, and this is determined by dividing the mass of a fiber bundle having a certain length by the number of fibers, and converting the value to a mass corresponding to a length of 10,000 m.

The carbon fiber that can be used in the prepreg that can be used in the laminate of the invention is preferably a carbon fiber that has been subjected to a surface treatment, particularly an electrolytic treatment. Examples of the surface treating agent include an epoxy-based sizing agent, a urethane-based sizing agent, a nylon-based sizing agent, and an olefin-based sizing agent. When a surface treatment is applied, it is advantageous in that the tensile strength and flexural strength can be increased. Regarding the method for producing a prepreg, a method of superposing a thermoplastic resin that is in a nonwoven fabric form, a film form, a sheet form or the like, on reinforcing fibers that are unidirectionally aligned, and impregnating the reinforcing fibers by heating and pressurizing the thermoplastic resin and the fibers, may be used.

The prepreg that can be used for the layer (A) of the invention can be obtained by, for example, preparing two sheets of a thermoplastic resin that has been processed into a film form, interposing a reinforcing fiber sheet in which reinforcing fibers are aligned in a sheet form, between the two sheets of thermoplastic resin, and performing heating and pressurization. More specifically, two sheets of a film are sent out from two rolls that send out two sheets of a film formed from a thermoplastic resin, a reinforcing fiber sheet supplied from a roll of a reinforcing fiber sheet is interposed between the two sheets of film, and then the sheet and the films are heated and pressurized. Regarding the means for heating and pressurization, any known means can be used, and the means may be even a means requiring utilization of two or more heated rolls, or a multistage process of using plural preheating apparatuses and plural pairs of heated rolls, or the like. Here, it is not necessary that only one kind of the thermoplastic resin that constitutes the film is used, and it is acceptable to further laminate films formed from different kinds of thermoplastic resins, using an apparatus such as described above.

The heating temperature may vary depending on the kind of the thermoplastic resin, and the heating temperature is usually preferably 100°C to 400°C. On the other hand, the pressure at the time of pressurization is usually preferably 0.1 MPa to 10 MPa. When the pressure is in this range, the reinforcing fibers included in the prepreg can be impregnated with the thermoplastic resin, which is preferable. Furthermore, regarding the prepreg that can be used for the fiber-reinforced resin laminate of the present invention, a commercially available prepreg can also be used.

It is preferable that the prepreg including reinforcing fibers and resin (a), which constitutes the layer (A) used in the present invention, has incisions each having a depth that cuts the reinforcing fibers in a direction that traverses the reinforcing fibers; that the angle θ between an incision and a reinforcing fiber is preferably 60° or less, more preferably from 30° to 60°; and that the sum total of the length of incisions la per 1 $m^2$ of the prepreg is 150 m or less, and more preferably from 20 m to 100 m, from the viewpoint that a good balance is obtained between moldability and mechanical characteristics of the fiber-reinforced resin laminate. More specifically, the angle θ between an incision and a reinforcing fiber is preferably 30° to 60°. Meanwhile, the angle θ in a case in which the shape of incision when viewed from a planar view is a curved line, the angle can be determined by considering the angle formed by a reinforcing fiber and an incision, and making measurement in the same manner as in the case of a linear incision. In a case in which the prepreg base material has incisions, it is preferable that the incisions cut the reinforcing fiber from the upper surface to the lower surface of the prepreg base material. The sum total of the length of incisions la per 1 $m^2$ of the prepreg is preferably 20 m to 150 m, and more preferably 20 m to 100 m.

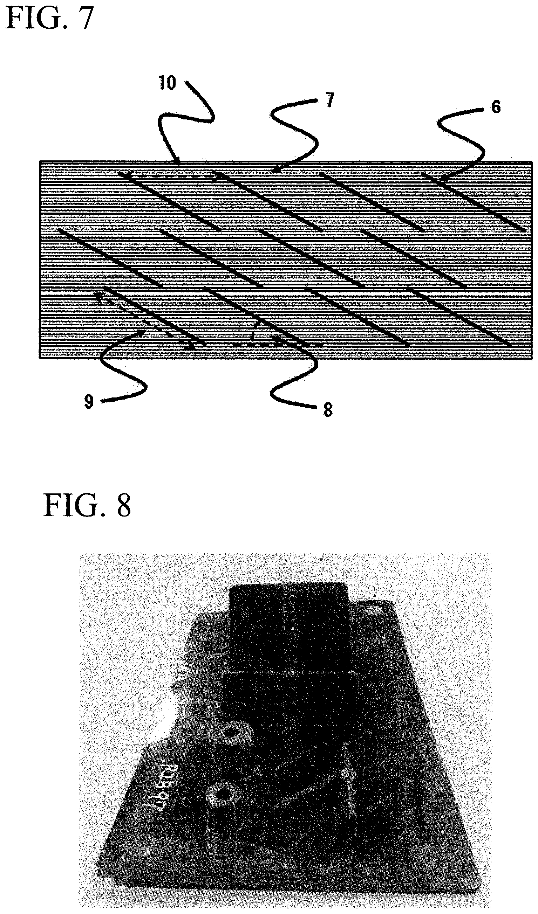

The shape of the incisions may be a linear shape, or may be a curved line shape. In Fig. 7, linear-shaped incisions are provided obliquely to the orientation direction of the reinforcing fibers; however, the incisions may also be provided vertically. The sum total of the length of incisions la per 1 $m^2$ (hereinafter, also referred to as cutting length) can be made larger by providing curved line-shaped incisions, under the conditions of using the same incision angle and the same fiber length. In this case, enhancement of moldability can be expected while high mechanical characteristics are maintained. When linear-shaped incisions are employed, higher mechanical characteristics are obtained.

In regard to the prepreg that is included in the fiber-reinforced resin laminate of the present invention, the length of cut reinforced fibers (average fiber length) La is not particularly limited; however, from the viewpoints of mechanical characteristics and fluidity, the length is preferably from 5 mm to 100 mm. Particularly, in order to achieve a balance between sufficient mechanical properties and the flow into thin-walled parts such as ribs at the time of stamping molding, the length is more preferably from 10 mm to 50 mm. More specifically, the length of cut reinforcing fibers (average fiber length) La is preferably 5 mm to 100 mm, and more preferably 10 mm to 50 mm. Meanwhile, the average fiber length can be measured by the following procedure.

<Measurement of average fiber length>

The resin portion of a fiber-reinforced thermoplastic resin molded product is dissolved by heating in a mixed solvent of equal amounts of phenol/tetrachloroethane. Subsequently, the resultant is separated by filtration, the carbon fibers thus obtained are observed with an optical microscope, and the average fiber length is measured.

The prepreg that can be used for the present invention can be obtained by inserting incisions by utilizing a laser marker, a cutting plotter, a punching die or the like. However, when the incisions are provided using a laser marker, it is preferable because there is an effect that complicated incisions such as curved lines or zigzag lines can be processed at a high speed. Also, when the incisions are provided using a cutting plotter, it is preferable because there is an effect that a large-sized prepreg layer which measures 2 m or more on each side can be processed. Furthermore, when the incisions are provided using a punching die, it is preferable because there is an effect that processing is enabled at a high speed.

In a laminate formed from the prepreg including reinforcing fibers and resin (a), which is used for the layer (A) of the present invention, it is preferable that plural prepregs are laminated such that the directions of the reinforcing fibers are pseudo-isotropically arranged, from the viewpoint of reducing anisotropy of the laminate.

In regard to the laminate formed from the prepreg including carbon fibers and resin (a), which is used for the layer (A) of the present invention, it is preferable that a prepreg in which the direction of the reinforcing fibers included in the prepreg is 0°, and a prepreg in which the direction of the reinforcing fibers is 90° are alternately laminated, from the viewpoint of reducing anisotropy of the laminate. It is more preferable that a prepreg in which the direction of the reinforcing fibers included in the prepreg is 0°, a prepreg in which the direction of the reinforcing fibers is 45°, and a prepreg in which the direction of the reinforcing fibers is 90°, and a prepreg in which the direction of the reinforcing fibers is 135° (-45°), are laminated in sequence.

(Layer (B))

The layer (B) used in the present invention is a sheet formed from a filler-containing resin composition including resin (c) and a filler, and the product of the square of the volume percentage content Vf of the filler and the average value of the maximum length of the filler, Lb mm, is 2.0 mm or less. The product is more preferably 0.02 mm to 1 mm.

(Filler-containing resin composition)

The filler-containing resin composition that constitutes the layer (B) used in the present invention includes resin (c).

(Resin)

Examples of the resin (c) that constitute the layer (B) used in the present invention include a thermosetting resin and a thermoplastic resin. From the viewpoints of molding cycle or handling, a thermoplastic resin is preferred. Examples of the thermosetting resin include thermosetting resins such as an epoxy resin, an unsaturated polyester resin, a vinyl ester resin, a phenolic resin, an epoxy acrylate resin, a urethane acrylate resin, a phenoxy resin, an alkyd resin, a urethane resin, a maleimide resin, and a cyanate resin. Examples of the thermoplastic resin include styrene-based resins such as polystyrene, a (meth)acrylic acid ester/styrene copolymer, an acrylonitrile/styrene copolymer, a styrene/maleic anhydride copolymer, ABS, ASA, and AES; acrylic resins such as polymethyl methacrylate; polycarbonate-based resins; polyamide-based resins; polyester-based resins such as polyethylene terephthalate and polybutylene terephthalate; polyphenylene ether-based resins; polyoxymethylene-based resins; polysulfone-based resins; polyallylate-based resins; polyphenylene sulfide-based resins; thermoplastic polyurethane-based resins; polyolefin-based resins such as polyethylene, polypropylene, polybutene, poly-4-methylpentene, an ethylene/propylene copolymer, and an ethylene/butene copolymer; copolymers of $\alpha$-olefins and various monomers, such as an ethylene/vinyl acetate copolymer, an ethylene/(meth)acrylic acid ester copolymer, an ethylene/maleic anhydride copolymer, and an ethylene/acrylic acid copolymer; aliphatic polyester-based resins such as polylactic acid, polycaprolactone, and an aliphatic glycol/aliphatic dicarboxylic acid copolymer; and biodegradable resins such as biodegradable cellulose, a polypeptide, polyvinyl alcohol, starch, carrageenan, and chitinaceous/chitosan materials. Preferred examples include polyamide-based resins and polyolefin-based resins. Specific examples of the polyamide-based resins include nylon 6 and nylon 66, and among them, nylon 6 is preferred. Regarding the polyolefin-based resins, among them, polypropylene and an acid-modified polypropylene are preferred.

(Resin additives)

Furthermore, if necessary, various resin additives can be incorporated into the layer, and examples of the resin additives include a colorant, an oxidation inhibitor, a metal inactivating agent, carbon black, a nucleating agent, a mold release agent, a lubricating agent, an antistatic agent, a photostabilizer, an ultraviolet absorber, an impact resistance improver, a melt tension improver, and a flame retardant.

The viscosity of the matrix resin (resin) that constitutes the layer (B) is usually 0.1 Pa·s to 10,000 Pa·s, and preferably 1.0 Pa·s to 5,000 Pa·s. If the viscosity is too higher, stamping moldability is deteriorated, and if the viscosity is too low, the density distribution of the carbon fibers in a molded article after stamping molding becomes non-uniform, and the sufficient mechanical characteristics required for a structure are not obtained. Such viscosity is a value measured by a parallel plate method, using a rotational rheometer (ARES; manufactured by TA Instruments, Inc.). More particularly, the dynamic viscoelasticity is measured under the conditions of a rotating plate diameter of 25 mm, an angular frequency of 100 rad/sec, and a temperature of (softening point or melting point + 40°C).

(Filler)

The filler-containing resin composition that constitutes the layer (B) used in the present invention includes a filler and the resin (c).

Regarding the filler, various inorganic fillers can be incorporated. The inorganic filler is not particularly limited; however, examples thereof include fibrous fillers such as glass fibers and carbon fibers; plate-shaped fillers such as talc, mica, and graphite; and particulate fillers such as calcium carbonate and silica. A fibrous filler or a plate-shaped filler is preferred, and a fibrous filler (reinforcing fibers) is more preferred. An anisotropic filler can easily increase the strength in a particular direction. Regarding these fillers, it is acceptable to use plural kinds at the same time.

Regarding the filler, a recycled material is preferred. Examples of the recycled material include a fiber waste generated at the time of carbon fiber prepreg production; a waste generated in a production process for stampable sheets that are produced by laminating thermoplastic resin sheets and prepregs and performing heating and pressurization; a waste generated in a trimming process after stamping molding; and carbon fibers remaining after resin components are eliminated from stampable sheets or from thermoplastic resin molded articles as a waste generated at the time of stamping molding. Among them, it is preferable to use a waste generated in a trimming process after stamping molding, after pulverizing the waste.

The average value of the length (average fiber length) Lb of the reinforcing fibers that are incorporated as a filler into the resin (c) that constitutes the layer (B) used in the present invention, is not particularly limited; however, in order to achieve a balance between sufficient mechanical properties and the flow into thin-walled parts such as ribs at the time of stamping molding, the length is preferably 10 mm or less. More specifically, the average value of the maximum length of the filler, Lb, is preferably 1 mm to 5 mm, and more preferably 0.5 mm to 2 mm. Here, the average value of the maximum length of the filler can be measured by the following procedure.

\<Measurement of average fiber length\>

The resin portion of a fiber-reinforced thermoplastic resin molded product is dissolved by heating in a mixed solvent of equal amounts of phenol/tetrachloroethane. Subsequently, the resultant is separated by filtration, the carbon fibers thus obtained are observed with an optical microscope, and the average fiber length is measured.

The fiber volume percentage content of the fibers (volume percentage content Vf of the reinforcing fibers) incorporated into the resin (c) that constitutes the layer (B) used in the present invention is preferably 30% or less relative to the volume of the prepreg. When the fiber volume percentage content is 30% or more, sufficient flow characteristics cannot be obtained at the time of stamping molding. More specifically, the fiber volume percentage content is preferably 5% to 25%, and more preferably 10% to 20%. Regarding such a fiber volume percentage content, for example, a value determined using the following formulae, from the density of the prepreg, ρc, obtained by a water displacement method; the density of the fibers, ρf, obtained by a similar method; the mass of the prepreg, W; and the weight W1 obtained after the prepreg is combusted and the resin is burned down, is used.

$$Wf = (W - W1) \times 100/W \hspace{2cm} \text{Formula (1)}$$

$$Vf = Wf \times \rho c/\rho f \hspace{2cm} \text{Formula (2)}$$

The flexural modulus of the layer (B) is usually 0.1 GPa to 30 GPa, and preferably 0.5 GPa to 10 GPa. If the flexural modulus is too high, stamping moldability is decreased. If the flexural modulus is too low, heat resistance is deteriorated, and sufficient mechanical characteristics cannot be obtained in a high-temperature environment.

Such flexural modulus can be measured based on JIS K7074. That is, a three-point bending test can be carried out by placing a test specimen having a width of 25 mm and a length of 100 mm on a support having a size of R2 mm at a gauge length of 80 mm, and performing the test at a crosshead speed of 5 mm/min using an indenter having a size of R5 mm.

Regarding the resin that can be used for the molded article of the present invention, a commercially available product may also be used. Examples thereof include, for a polyamide resin, 1013B manufactured by Ube Industries, Ltd.; S6007 manufactured by Mitsubishi Gas Chemical Company, Inc.; and for a glass fiber-reinforced resin, 1015 GC3, 1015 GC6, and 1015 GC9 manufactured by Ube Industries, Ltd.; and FUNCSTER™ TMPA66 (all product names) manufactured by Japan Polypropylene Corp.

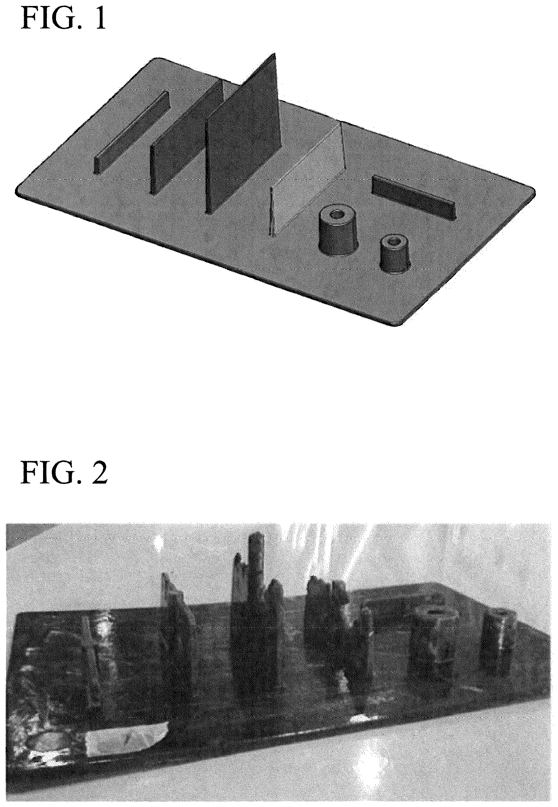

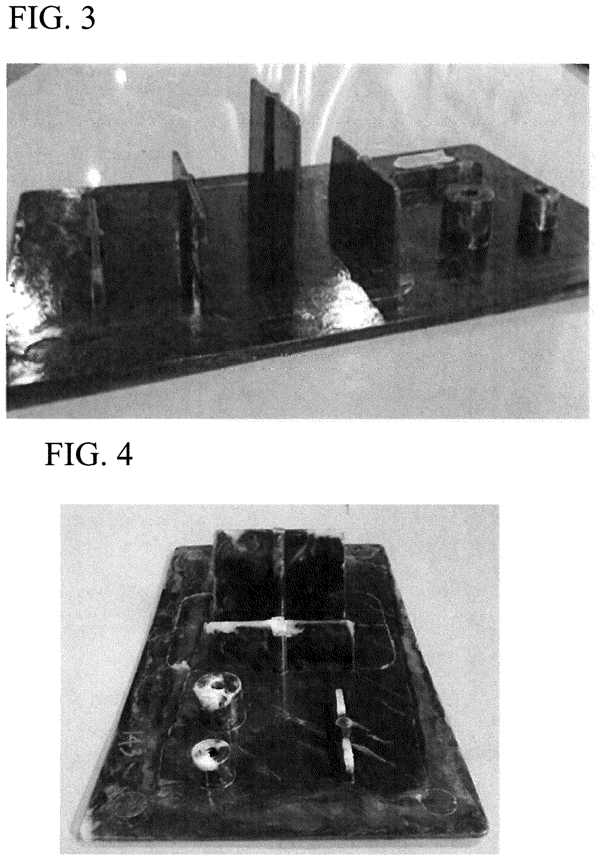

The thicknesses of the layer (A) and the layer (B) used in the present invention are such that the value obtained by dividing the sum total of the thickness of the layer (A) by the sum total of the thickness of the layer (B) is from 0.5 to 3.0. If the aforementioned value is more than 3.0, as illustrated in Fig. 2, the fluidity required for thin-walled parts such as ribs cannot be obtained at the time of stamping molding, while if the value is less than 0.5, the density of the carbon fibers in a molded article of the laminate becomes small, and sufficient mechanical characteristics required from a structure are not obtained. When the value obtained by dividing the sum total of the thickness of the layer (A) by the sum total of the thickness of the layer (B) is adjusted to be from 0.5 to 3.0, as illustrated in Fig. 3, thin-walled parts such as ribs can also be filled, and a molded article having a uniform density of carbon fibers is obtained. It is preferable that the value obtained by dividing the sum total of the thickness of the layer (A) by the sum total of the thickness of the layer (B) is from 1.0 to 2.0. Meanwhile, the thicknesses of the layer (A) and the layer (B) can be measured by, for example, making an observation with a stereoscopic microscope.

Since the complex viscosity $\eta^*$ is a value calculated from the complex elastic modulus $G^*$, which is calculated from the storage modulus $G'$ and loss modulus $G''$, the characteristics of a viscoelastic fluid can be clearly presented. Furthermore, the complex viscosity $\eta^*$ is calculated by the following formulae, and is a value measured by, for example, a parallel plate method using a rotational rheometer (ARES; manufactured by TA Instruments, Inc.). More particularly, the complex viscosity is measured under the conditions of a rotating plate diameter of 25 mm, an angular frequency of 100 rad/sec, and a temperature of (softening point or melting point + 40°C).

$$\eta^* = G^* / \omega \ (\omega: \text{angular velocity})$$

$$G^* = \sqrt{(G'^2 + G''^2)}$$

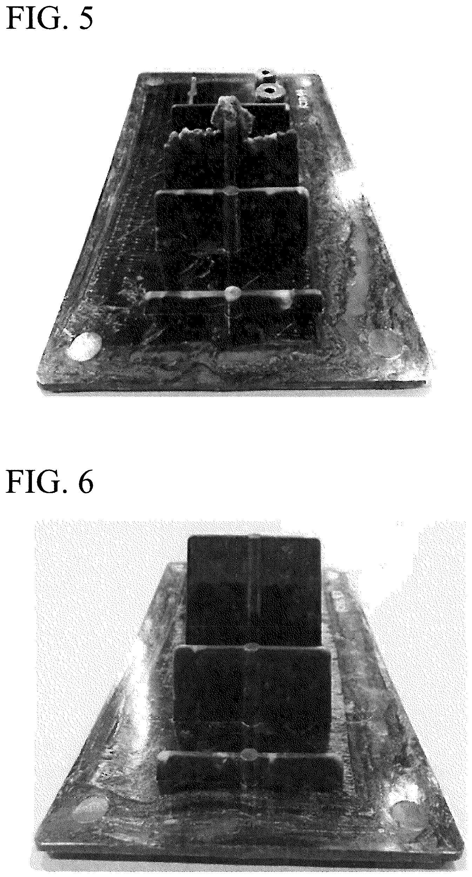

The complex viscosity of the layer (A) and the complex viscosity of the layer (B) at a temperature of the softening point or melting point of the resin that forms the layer (A) used in the present invention plus 40°C, and at 100 rad/sec, are such that the value obtained by dividing the complex viscosity of the layer (A) by the complex viscosity of the layer (B) is from 0.85 to 4.0. If the aforementioned value is more than 4.0, as illustrated in Fig. 4, outflow of the molded article end face of the layer (B) at the time of stamping molding cannot be suppressed, and particularly, the density distribution of carbon fibers of the molded article becomes non-uniform. Thus, sufficient mechanical characteristics required from a structure are not obtained. If the aforementioned value is less than 0.85, as illustrated in Fig. 5, fluidity is decreased, and the fluidity required for thin-walled parts such as ribs is not obtained. When the aforementioned value is from 0.85 to 4.0, as illustrated in Fig. 6, thin-walled parts such as ribs can also be filled, and a molded article having a uniform density of carbon fibers can be obtained. It is more preferable that the value obtained by dividing the complex viscosity of the layer (A) by the complex viscosity of the layer (B) is 1.5 to 3.

It is preferable for the fiber-reinforced resin laminate according to the present invention that one layer (B) is laminated between one layer (A) and another layer (A). At this time, the two layers (A) may be laminates formed from the same prepreg, or may be laminates formed from different prepregs. However, the two layers (A) should both satisfy the condition that the product of the square of the volume percentage content Vf of the reinforcing fibers and the average fiber length, La mm, is larger than 2.0 mm and 15 mm or less.

Specifically, it is preferable that the reinforcing fibers of one layer (A) are carbon fibers, the resin thereof is nylon 6 or an acid-modified polypropylene, the reinforcing fibers of the other layer (A) are carbon fibers, the resin thereof is nylon 6 or an acid-modified polypropylene, and the resin of the layer (B) is nylon 6, polypropylene, or an acid-modified polypropylene.

It is preferable that the reinforcing fibers of one layer (A) and the other layer (A) are carbon fibers, the resin thereof is nylon 6 or an acid-modified polypropylene, and the resin of the layer (B) is nylon 6, polypropylene, or an acid-modified polypropylene.

Furthermore, in a case in which the fiber-reinforced resin laminate is composed of one layer (A) and one layer (B), it is preferable that the reinforcing fibers are carbon fibers, the resin is nylon 6 or an acid-modified polypropylene, and the resin of the layer (B) is nylon 6, polypropylene, or an acid-modified polypropylene.

In the fiber-reinforced resin laminate according to the present invention, layer (A), the following expression (1) is preferably satisfied:

$$0.85 \leq A1/B1 \leq 4.0 \text{ ... Expression (1)}$$

A1: absolute value of the complex viscosity of the layer (A) at a temperature of (softening point or melting point of resin (a') that forms the layer (A) + 40°C), and
B1: absolute value of the complex viscosity of the layer (B) at a temperature of (softening point or melting point of resin (a') that forms the layer (A) + 40°C),

wherein the complex viscosity $\eta^*$ is a value measured by a parallel plate method using a rotational rheometer under the conditions of a rotating plate diameter of 25 mm and an angular frequency of 100 rad/sec.

(Method for producing fiber-reinforced resin laminate)

The method for producing a fiber-reinforced resin laminate according to the present invention may be a method including a step of heating and pressurizing layer (A) of a prepreg laminate including reinforcing fibers that are unidirectionally oriented and a thermoplastic resin composition, and layer (B) of a thermoplastic resin composition, to a temperature higher than or equal to the softening point or melting point, and thereby integrating (fusing) the layers.

More specifically, the method for producing a fiber-reinforced resin laminate according to the present invention may be a method including a step of laminating layer (A) and layer (B), subsequently heating the laminate to a temperature higher than or equal to the softening point or melting point of any one thermoplastic resin among the thermoplastic resins that constitute the layer (A) and the layer (B), and thereby fusing the layers.

The heating temperature is preferably 30°C to 400°C, and more preferably 50°C to 350°C.

Here, the term "fusing" means that layer (A) and layer (B) are welded.

(Method for producing molded article of fiber-reinforced resin laminate)

The method for producing a molded article of a fiber-reinforced resin laminate includes introducing the fiber-reinforced resin laminate according to the present invention into a mold set to a predetermined temperature, and then performing stamping molding.

Specifically, the method can be carried out using a conventional apparatus, for example, a heating and pressing machine, and for the mold to be used at that time, a mold having a desired shape can be used. Also, regarding the material for the mold, those materials that are conventionally used for hot stamping molding can be employed, and a so-called mold made of a metal can be used. Specifically, the present process can be carried out by, for example, disposing the laminate inside a mold, and heating and pressurizing the laminate.

In regard to the heating, the temperature may vary depending on the kind of the resin included in the laminate; however, it is preferable to perform heating at 30°C to 400°C, and more preferably, it is preferable to perform heating at 50°C to 350°C. Furthermore, prior to the heating, preliminary heating may also be carried out. In regard to preliminary heating, it is preferable to perform heating usually at 30°C to 400°C, and preferably at 50° to 350°C.

In regard to the pressurization, the pressure applied to the laminate is preferably 0.1 MPa to 10 MPa, and more preferably 0.2 MPa to 2 MPa. For this pressure, a value obtained by dividing the pressing force by the area of the fiber-reinforced resin laminate is employed.

The time for performing heating and pressurization is preferably 0.1 minutes to 30 minutes, and more preferably 0.5 minutes to 10 minutes. Furthermore, the cooling time provided after heating and pressurization is preferably 0.5 minutes to 30 minutes.

The thickness of the integrated fiber-reinforced thermoplastic resin layer according to the present invention, which has been subjected to hot stamping molding as described above, is preferably 0.5 mm to 10 mm. The thickness of the fiber-reinforced thermoplastic resin layer can be measured by making measurement with a stereoscopic microscope.

Meanwhile, the heating and pressurization may also be carried out under the conditions in which a lubricating agent exists between the mold and the laminate base material. As a result of the action of the lubricating agent, the friction between the mold and the laminate base material is reduced, and fluidity at the time of the heating and pressurization described above is enhanced. Therefore, impregnation of reinforcing fibers with a thermoplastic resin can be improved, and also, voids existing between the reinforcing fibers and between the reinforcing fibers and the thermoplastic resin in the laminate base material thus obtainable can be reduced.

Regarding the lubricating agent, for example, a silicone-based lubricating agent or a fluorine-based lubricating agent can be used. Furthermore, a mixture thereof may also be used. Regarding the silicone-based lubricating agent, a heat-resistant agent that can be used in a high-temperature environment is preferably used. More specific examples include silicone oils such as methylphenylsilicone oil and dimethylsilicone oil, and commercially available lubricating agents can be preferably used. Regarding the fluorine-based lubricant, a heat-resistant agent that can be used in a high-temperature environment is preferably used. Specific examples thereof include fluorine oils such as perfluoropolyether oil and a low molecular weight polymer of ethylene trifluoride chloride (weight average molecular weight = 500 to 1,300) can be used.

The lubricating agent may be supplied onto one surface or both surfaces of the laminate, onto one surface or both surfaces of the mold, or onto one surface or both surfaces of both the laminate and the mold, using an appropriate means such as a lubricant application apparatus, or may be applied in advance on the surface of the mold. Above all, an embodiment in which the lubricating agent is supplied onto both surfaces of the laminate is preferred.

EXAMPLES

Hereinafter, the present invention will be more specifically described by way of Examples, but the present invention is not intended to be limited to the inventions described in Examples.

(Evaluation of stamping moldability)

Using a far-infrared heater type heating apparatus (manufactured by NGK Kiln Tech Corp., product name: H7GS-71289), in which the heater temperature was set to 360°C in a case in which the thermoplastic resin that formed the layer (A) was a nylon-based resin, and to 270°C in a case in which the thermoplastic resin that formed the layer (A) was a polypropylene-based resin, plural sheets of a fiber-reinforced resin laminate that had been cut to a size of 100 mm in width and 200 mm in length were stacked such that the sum of the thickness was about 6 mm, and the fiber-reinforced resin laminate sheets were heated and softened for 6 minutes, without causing the sheets to overlap each other. Using a 300-t pressing machine (manufactured by Kawasaki Hydromechanics Corp.) which used a molding mold (Fig. 1) having a mold projection area of 140 × 240 mm, equipped on the backside with a mold having ribs, each measuring 70 mm to 60 mm in width, 60 mm in height, and 3 mm to 2 mm in thickness, and having a cylindrical part for ejector pin having a diameter of 6 mm embedded at the center in the width direction, the fiber-reinforced resin laminate sheets that had been preheated and softened were disposed in a stacked manner in a lower mold of the molding mold. Press molding was performed under the conditions of a charge time of 25 s, a mold temperature of 145°C or 90°C, a molding pressure of 18 MPa, and a molding time of 1 minute, and thus a molded product was obtained. For the molded article thus obtained, evaluation was performed based on the following criteria.

- The mold is fully filled at a mold temperature of 90°C, and resin-rich portions are not recognized at the tip of the ribs. "⊙"
- The mold is fully filled at a mold temperature of 90°C, and resin-rich portions are recognized at the tips of the ribs. "○"
- The mold is fully filled at a mold temperature of 145°C, but filling occurs short at a mold temperature of 90°C. "Δ"
- Filling occurs short at a mold temperature of 145°C. "×"

(Evaluation of chemical characteristics)

A specimen was produced by cutting a fiber-reinforced resin laminate thus produced, into a size of 100 mm in length and 25 mm in width at 0°, 45°, 90°, and -45° with respect to the fiber orientation direction at the outermost surface of the prepreg. According to the test method defined in JIS K-7074, a three-point bending test was performed using a universal tester (manufactured by Instron, Inc., product name: Model 4465), at a gauge length of 80 mm and a crosshead speed of 5.0 mm/min, and thus the flexural strength and flexural modulus were calculated. The number of specimens that were cut at each angle and analyzed was set to n = 5, and the average values were designated as the strength and elastic modulus at each angle. Furthermore, a sample having a value of the flexural modulus at 0° of 20 GPa or larger and a value of (flexural modulus at an angle with low elastic modulus)/(flexural modulus at 0°) of 0.7 or larger was considered as a sample having small anisotropy and excellent rigidity and was rated as ⊙; a sample having a flexural modulus at 0° of 20 GPa or larger and a value of the ratio of 0.7 to 0.5 was rated as ○; a sample having a flexural modulus at 0° of 20 GPa or larger and a value of the ratio of 0.5 or less was rated as Δ; and a sample having a flexural strength at 0° of 18 GPa or less was rated as ×.

(Measurement of complex viscosity)

The complex viscosity $\eta^*$ is a value measured by a parallel plate method using a rotational rheometer (ARES; manufactured by TA Instruments, Inc.). More particularly, the complex viscosity was measured under the conditions of a rotating plate diameter of 25 mm, an angular frequency of 100 rad/sec, and a temperature of (softening point or melting point + 40°C).

Example 1 (not belonging to the invention)

(Production of prepreg)

Carbon fibers (manufactured by Mitsubishi Rayon Co., Ltd., product name: PYROFILL TR-50S15L) were aligned in a planar form such that the direction of the reinforcing fibers was unidirectional, and thus a reinforcing fiber sheet having a basis weight of 72.0 g/m² was produced. Both surfaces of this reinforcing fiber sheet were interposed between films of nylon 6 (nylon 6; manufactured by Ube Industries, Ltd., product name: 1013B, melting point: 218°C, thickness: 40 μm), and the reinforcing fiber sheet was impregnated with the thermoplastic resin by passing the assembly several times between calendar rolls. Thus, a prepreg having a carbon fiber volume percentage content (Vf) of 34% and a thickness of 0.125 mm was obtained.

(Production of fiber-reinforced resin laminate)

The prepreg thus obtained was cut into a size of 300 mm on each side, and incisions were inserted therein at a constant interval as indicated in Table 1, using a sample cutting machine (manufactured by Laserck Corp., product name: L-2500). At that time, incision processing was performed, such that areas extending to the interior by 5 mm from the edges of the sheet were excluded, the reinforcing fibers had a constant length L of 25.0 mm and an average cutting length 1 of 14.1 mm, and the angle θ formed by an incision that cut the fibers and a reinforcing fiber was 45°. Thus, a prepreg (hereinafter, abbreviated to PPG) was obtained. At this time, the sum total of the cutting length, 1a, per 1 m² was 56.6 m.

Inside a pillbox type mold which measured 300 mm on each side and 1.5 mm in depth, a nylon 6 sheet (nylon 6; manufactured by Ube Industries, Ltd., product name: 1013B) having a thickness of 0.5 mm was interposed between a PPG laminate composed of four sheets of PPG in which the directions of the reinforcing fibers were 0°, 45°, 90°, and -45°, and a PPG laminate composed of four sheets of PPG in which the directions of the reinforcing fibers were 0°, 45°, 90°, and -45° as indicated in Table 1. Subsequently, the assembly was heated and then was maintained, using a compression molding machine (manufactured by Shinto Metal Industries Corp., product name: SFA-50HH0), for 7 minutes under the conditions of 250°C and an oil pressure indication of 0 MPa with a high temperature side press. Subsequently, the mold was maintained for 7 minutes under the conditions of an oil pressure indication of 2 MPa (pressing pressure: 0.55 MPa) at the same temperature, and then the mold was transferred to a cooling press and maintained for 3 minutes at 30°C and an oil pressure indication of 5 MPa (pressing pressure: 1.38 MPa). Thereby, a fiber-reinforced resin laminate was obtained.

Specimens cut from the sheet were used to perform various evaluations.

Example 2 (not belonging to the invention)

A fiber-reinforced resin laminate was produced in the same manner as in Example 1, except that incision processing at an angle θ formed by an incision that cut the fibers and a reinforcing fiber of 30° was performed such that the carbon fibers had a constant length (average fiber length) L of 25.0 mm and an average cutting length 1 of 20 mm. An evaluation of the laminate was performed. The sum total of the cutting length, la, per 1 $m^2$ of the PPG used at the surface layer at this time was 80 m.

Example 3 (not belonging to the invention)

A fiber-reinforced resin laminate was produced in the same manner as in Example 1, except that the PPG and a nylon 6 sheet (nylon 6; manufactured by Ube Industries, Ltd., product name: 1013B) having a thickness of 1 mm were superposed as indicated in Table 1, and an evaluation of the laminate was performed. The sum total of the cutting length, la, per 1 $m^2$ of the PPG used at the surface layer at this time was 56.6 m.

Example 4 (not belonging to the invention)

(Production of prepreg)

Carbon fibers (manufactured by Mitsubishi Rayon Co., Ltd., product name: PYROFILL TR-50S15L) were aligned in a planar form such that the direction of the reinforcing fibers was unidirectional, and thus a reinforcing fiber sheet having a basis weight of 72.0 $g/m^2$ was produced. Both surfaces of this reinforcing fiber sheet were interposed between films of an acid-modified polypropylene (acid-modified polypropylene; manufactured by Mitsubishi Chemical Corp., product name: 958V, melting point: 168°C, thickness: 40 $\mu$m), and the reinforcing fiber sheet was impregnated with the thermoplastic resin by passing the assembly several times between calendar rolls. Thus, a PPG having a carbon fiber volume percentage content (Vf) of 34% and a thickness of 0.125 mm was obtained.

(Production of fiber-reinforced resin laminate)

The PPG thus obtained was cut into a size of 300 mm on each side, and incisions were inserted therein at a constant interval as indicated in Table 1, using a sample cutting machine (manufactured by Laserck Corp., product name: L-2500). At that time, incision processing was performed, such that areas extending to the interior by 5 mm from the edges of the sheet were excluded, the reinforcing fibers had a constant length L of 25.0 mm and an average cutting length 1 of 14.1 mm, and the angle θ formed by an incision that cut the fibers and a reinforcing fiber was 45°. Thus, a PPG was obtained. At this time, the sum total of the cutting length, la, per 1 $m^2$ was 56.6 m.

Inside a pillbox type mold which measured 300 mm on each side and 1.5 mm in depth, a polypropylene sheet (polypropylene; manufactured by Japan Polypropylene Corp., product name: EA6) having a thickness of 0.5 mm was interposed between a PPG laminate composed of four sheets of PPG in which the directions of the reinforcing fibers were 0°, 45°, 90°, and -45° as indicated in Table 1, and a PPG laminate composed of four sheets of PPG in which the directions of the reinforcing fibers were 0°, 45°, 90°, and -45°. Subsequently, the assembly was heated and then was maintained, using a compression molding machine (manufactured by Shinto Metal Industries Corp., product name: SFA-50HH0), for 7 minutes under the conditions of 200°C and an oil pressure indication of 0 MPa with a high temperature side press. Subsequently, the mold was maintained for 7 minutes under the conditions of an oil pressure indication of 2 MPa (pressing pressure: 0.55 MPa) at the same temperature, and then the mold was transferred to a cooling press and maintained for 3 minutes at 30°C and an oil pressure indication of 5 MPa (pressing pressure: 1.38 MPa). Thereby, a fiber-reinforced resin laminate was obtained.

(Example 5)

A fiber-reinforced resin laminate was produced in the same manner as in Example 1, except that the PPG and a glass fiber-reinforced nylon 6 sheet (nylon 6; manufactured by Ube Industries, Ltd., product name: 1015GC6) having a thickness of 0.5 mm were stacked as indicated in Table 1, and evaluation was performed. Furthermore, the sum total of the cutting length, la, per 1 $m^2$ of the PPG used at the surface layer was 56.6 m.

Example 6 (not belonging to the invention)

A fiber-reinforced resin laminate was produced in the same manner as in Example 4, except that the PPG and an acid-modified polypropylene sheet (acid-modified polypropylene; manufactured by Mitsubishi Chemical Corp., product name: P958V) having a thickness of 0.5 mm were stacked as indicated in Table 1, and evaluation was performed. Furthermore, the sum total of the cutting length, la, per 1 $m^2$ of the PPG used at the surface layer was 56.6 m.

(Comparative Example 1)

A fiber-reinforced resin laminate was produced in the same manner as in Example 1, except that the PPG and a glass fiber-reinforced nylon 6 sheet (nylon 6; manufactured by Ube Industries, Ltd., product name: 1015GC6) having a thickness of 0.16 mm were stacked as indicated in Table 1, and evaluation was performed. Furthermore, the sum total of the cutting length, la, per 1 $m^2$ of the PPG used at the surface layer was 56.6 m.

(Comparative Example 2)

Inside a pillbox type mold which measured 300 mm on each side and 1.5 mm in depth, 120 g of carbon fiber-reinforced nylon 66 short fiber pellets (nylon 66; manufactured by Mitsubishi Rayon Co., Ltd., product name: N66-C-20) were uniformly scattered within the mold. The pellets were heated and then were maintained, using a compression molding machine (manufactured by Shinto Metal Industries Corp., product name: SFA-50HH0), for 7 minutes under the conditions of 300°C and an oil pressure indication of 0 MPa with a high temperature side press. Subsequently, the mold was maintained for 7 minutes under the conditions of an oil pressure indication of 2 MPa (pressing pressure: 0.55 MPa) at the same temperature, and then the mold was transferred to a cooling press and maintained for 3 minutes at 30°C and an oil pressure indication of 5 MPa (pressing pressure: 1.38 MPa). Thereby, a fiber-reinforced resin laminate was obtained.

(Comparative Example 3)

A fiber-reinforced resin laminate was produced in the same manner as in Example 1, except that the PPG and a nylon 6 sheet (nylon 6; manufactured by Ube Industries, Ltd., product name: 1013B) having a thickness of 2.5 mm were stacked as indicated in Table 1, and evaluation was performed. Furthermore, the sum total of the cutting length, la, per 1 $m^2$ of the PPG used at the surface layer was 56.6 m.

[Table 1]

| | | | Example 1 | Example 2 | Example 3 | Example 4 | Example 5 | Example 6 |
|---|---|---|---|---|---|---|---|---|
| Configuration of PPG | | Incision angle $\theta$ (°) | 45 | 30 | 45 | 45 | 45 | 45 |
| | | Sum total of incision length 1a (m), per 1m$^2$ | 56.6 | 80 | 56.6 | 56.6 | 56.6 | 56.6 |
| | | Fiber length, L (mm) | 25 | 25 | 25 | 25 | 25 | 25 |
| | | Average incision length, I (mm) | 14.1 | 20 | 14.1 | 14.1 | 14.1 | 14.1 |
| | | Matrix resin (melting point: °C) | 1013B (218°C) | 1013B (218°C) | 1013B (218°C) | P958V (168°C) | 1013B(218°C) | P958V (168°C) |
| Layer configuration of laminate | Surface layer (layer A) | | PPG(0°) | PPG(0°) | PPG(0°) | PPG(0°) | PPG(0°) | PPG(0°) |
| | | | PPG(45°) | PPG(45°) | PPG(45°) | PPG(45°) | PPG(45°) | PPG(45°) |
| | | | PPG(90°) | PPG(90°) | PPG(90°) | PPG(90°) | PPG(90°) | PPG(90°) |
| | | | PPG(-45°) | PPG(-45°) | PPG(-45°) | PPG(-45°) | PPG(-45°) | PPG(-45°) |
| | Intermediate layer (layer B) | | 1013B (0.5mm) | 1013B (0.5mm) | 1013B (1.0mm) | EA6 (0.5mm) | 1015GC6 (0.5mm) | P958V (0.5mm) |
| | Surface layer (layer A) | | PPG(-45°) | PPG(-45°) | PPG(-45°) | PPG(-45°) | PPG(-45°) | PPG(-45°) |
| | | | PPG(90°) | PPG(90°) | PPG(90°) | PPG(90°) | PPG(90°) | PPG(90°) |
| | | | PPG(45°) | PPG(45°) | PPG(45°) | PPG(45°) | PPG(45°) | PPG(45°) |
| | | | PPG(0°) | PPG(0°) | PPG(0°) | PPG(0°) | PPG(0°) | PPG(0°) |
| Thickness of laminate (mm) | | | 1.5 | 1.5 | 2 | 1.5 | 1.5 | 1.5 |
| Carbon fiber average Vf (%) of laminate | | | 22 | 22 | 17 | 22 | 22 | 22 |
| Thickness of both surface layers (mm)/Thickness of intermediate layer (mm) | | | 2 | 2 | 1 | 2 | 2 | 2 |
| Vf$^2$ (%) of both surface layers $*$ average fiber length L | | | 2.89 | 2.89 | 2.89 | 2.89 | 2.89 | 2.89 |

(continued)

| | Example 1 | Example 2 | Example 3 | Example 4 | Example 5 | Example 6 |
|---|---|---|---|---|---|---|
| Vf² (%) of intermediate layer * average of maximum fiber length L | 0 | 0 | 0 | 0 | 0.02 | 0 |
| Complex viscosity of layer A. $\eta*A$ (Pa·S) (measurement temperature °C) | 430(260°C) | 430(260°C) | 430(260°C) | 560 (210°C) | 430(260°C) | 560(210°C) |
| Complex viscosity of layer B, $\eta*B$ (Pa·S) (measurement temperature °C) | 130(260°C) | 130(260°C) | 130(260°C) | 660 (210°C) | 530(260°C) | 130(210°C) |
| Complex viscosity of layer A, $\eta*A$/complex viscosity of layer B, $\eta*B$ | 3.31 | 3.31 | 3.31 | 0.85 | 0.81 | 4.3 |
| Evaluation of moldability | ◎ | ◎ | ◎ | ◎ | △ | ○ |
| Mechanical characteristics — Flexural strength at 0° (MPa) | 444 | 496 | 309 | 260 | 442 | 250 |
| Mechanical characteristics — Flexural modulus at 0° (GPa) | 34 | 39 | 28 | 32 | 37 | 31 |
| Mechanical characteristics — Flexural strength small — Angle (°) | 90 | 90 | 90 | 90 | 90 | 90 |
| Mechanical characteristics — Flexural strength small — Strength (MPa) | 255 | 273 | 248 | 170 | 242 | 165 |
| Mechanical characteristics — Elastic modulus (GPa) | 17 | 20 | 20 | 17 | 19 | 17 |
| (Flexural modulus at angle with low elastic modulus)/(Flexural modulus at 0°) | 0.5 | 0.51 | 0.71 | 0.53 | 0.51 | 0.55 |
| Evaluation | ○ | ○ | ◎ | ○ | ○ | ○ |

[Table 2]

| | | | Comparative Example 1 | Comparative Example 2 | Comparative Example 3 |
|---|---|---|---|---|---|
| Configuration of PPG | | Incision angle $\theta$ (°) | 45 | No incisions | 45 |
| | | Sum total of incision length 1a (m), per 1m² | 56.6 | | 56.6 |
| | | Fiber length, L (mm) | 25 | | 25 |
| | | Average incision length, I (mm) | 14.1 | | 14.1 |
| | | Matrix resin (melting point: °C) | 1013B (218°C) | Ny66(265°C) | 1013B (218°C) |
| Layer configuration of laminate | Surface layer (layer A) | | PPG (0°) | Carbon fiber-reinforced nylon 66 short fiber sheet | PPG(0°) |
| | | | PPG(45°) | | PPG(45°) |
| | | | PPG(90°) | | PPG(90°) |
| | | | PPG(-45°) | | PPG(-45°) |
| | Intermediate layer (layer B) | | 1015GC6 (0.16mm) | | 1013B (2.5mm) |
| | Surface layer (layer A) | | PPG(-45°) | | PPG(-45°) |
| | | | PPG(90°) | | PPG(90°) |
| | | | PPG(45°) | | PPG(45°) |
| | | | PPG(0°) | | PPG(0°) |
| Thickness of laminate (mm) | | | 1.2 | 1.5 | 3.5 |
| Carbon fiber average Vf (%) of laminate | | | 28 | 14 | 10 |
| Thickness of both surface layers (mm)/Thickness of intermediate layer (mm) | | | 6.3 | - | 0.4 |
| Vf² (%) of both surface layers * average fiber length L | | | 2.89 | 0.007 | 2.89 |
| Vf² (%) of intermediate layer * average of maximum fiber length L | | | 0.02 | | 0 |
| Complex viscosity of layer A, $\eta*$A (Pa·S) (measurement temperature °C) | | | 430 (260°C) | - | 560(210°C) |
| Complex viscosity of layer B, $\eta*$B (Pa·S) (measurement temperature °C) | | | 130(260°C) | | 130(210°C) |
| Complex viscosity of layer A, $\eta*$A/Complex viscosity of layer B, $\eta*$B | | | 3.31 | - | 4.3 |
| Evaluation of moldability | | | × | ◎ | ○ |

(continued)

| Mechanical characteristics | | | Comparative Example 1 | Comparative Example 2 | Comparative Example 3 |
|---|---|---|---|---|---|
| | Flexural strength at 0° (MPa) | | 450 | 330 | 220 |
| | Flexural modulus at 0° (GPa) | | 35 | 14 | 18 |
| | Flexural strength small | Angle (°) | 90 | No anisotropy | 90 |
| | | Strength (Mpa) | 215 | | 190 |
| | | Elastic modulus (Gpa) | 16 | | 15 |
| | (Flexural modulus at angle with low elastic modulus)/(Flexural modulus at 0°) | | 0.46 | - | 0.83 |
| | Evaluation | | Δ | × | × |

As is obvious from Table 1 and Table 2, Example 1 to 6 all exhibited satisfactory moldability and mechanical characteristics. On the contrary, Comparative Example 1 had poor moldability, and Comparative Examples 2 and 3 had poor mechanical characteristics. Thus, these are not suitable as structural materials. Also, among these, Example 3 achieved an excellent balance between moldability and mechanical characteristics.

INDUSTRIAL APPLICABILITY

According to the present invention, a fiber-reinforced resin laminate which has excellent mechanical characteristics applicable to structural materials, with less variation in the mechanical characteristics, and has excellent shapeability into complicated shapes, and which is inexpensive and enables molding in a short period of time, can be obtained.

EXPLANATIONS OF LETTERS OR NUMERALS

6: Incision
7: Reinforcing fiber
8: Angle formed by incision and reinforcing fiber
9: Cutting length
10: Length of cut reinforcing fiber

Claims

1. A fiber-reinforced resin laminate comprising the following layer (A) and the following layer (B) laminated together, for which the value obtained by dividing the sum total of the thickness of the layer (A) by the sum total of the thickness of the layer (B) is from 0.5 to 3.0:

layer (A): a laminate formed from a prepreg having reinforcing fibers impregnated with resin (a) or resin composition (a), the product of the square of the volume percentage content Vf of the reinforcing fibers and the average fiber length La (mm) being more than 2.0 mm and 15 mm or less; and
layer (B): a sheet formed from a filler-containing resin composition including resin (c) and a filler, the product of the square of the volume percentage content Vf of the filler and the average value Lb (mm) of the maximum length of the filler being 2.0 mm or less.

2. The fiber-reinforced resin laminate according to claim 1, wherein the following expression (1) is satisfied:

$$0.85 \le A1/B1 \le 4.0 \text{ ... Expression (1)}$$

A1: absolute value of the complex viscosity η* of the layer (A) at a temperature of (softening point or melting point of resin (a) that forms the layer (A) + 40°C), and

B1: absolute value of the complex viscosity η* of the layer (B) at a temperature of (softening point or melting point of resin (a) that forms the layer (A) + 40°C),

wherein the complex viscosity η* is a value measured by a parallel plate method using a rotational rheometer under the conditions of a rotating plate diameter of 25 mm and an angular frequency of 100 rad/sec.

3. The fiber-reinforced resin laminate according to claim 1 or 2, wherein the value obtained by dividing the sum total of the thickness of the layer (A) by the sum total of the thickness of the layer (B) is from 1.0 to 2.0.

4. The fiber-reinforced resin laminate according to any one of claims 1 to 3, wherein the resin that constitutes the layer (A) and/or the layer (B) is a thermoplastic resin.

5. The fiber-reinforced resin laminate according to any one of claims 1 to 4, wherein the prepreg that forms the layer (A) includes incisions each having a depth that cuts the reinforcing fibers in a direction that traverses the length direction of the reinforcing fibers.

6. The fiber-reinforced resin laminate according to claim 5, wherein the incisions of the prepreg that forms the layer (A) have a linear shape, the angle formed by the incision and the length direction of the reinforcing fibers is from 30° to 60°, and the sum total of the length of the incisions per 1 $m^2$ of the prepreg is from 20 m to 150 m.

7. The fiber-reinforced resin laminate according to any one of claims 1 to 6, wherein the average fiber length of the reinforcing fibers in the layer (A) is from 10 mm to 50 mm.

8. The fiber-reinforced resin laminate according to any one of claims 1 to 7, wherein one layer (B) is laminated between one layer (A) and another layer (A).

9. The fiber-reinforced resin laminate according to any one of claims 1 to 8, wherein the fiber-reinforced resin laminate is obtained by fusing the layer (A) and the layer (B) by heating the layers to a temperature higher than or equal to the softening point or the melting point of the resin that forms the layer (A) and the resin composition that forms the layer (B).

10. The fiber-reinforced resin laminate according to any one of claims 1 to 9, wherein the volume percentage content of the reinforcing fibers in the layer (A) is from 20% to 60%.

11. The fiber-reinforced resin laminate according to any one of claims 1 to 10, wherein the reinforcing fibers in the layer (A) are carbon fibers.

12. The fiber-reinforced resin laminate according to any one of claims 1 to 11, wherein the filler in the layer (B) is a recycled material.

13. The fiber-reinforced resin laminate according to any one of claims 1 to 12, wherein the reinforcing fibers in the layer (A) are carbon fibers having an average single fiber fineness of from 0.5 dtex to 2.4 dtex.

14. The fiber-reinforced resin laminate according to any one of claims 1 to 13, wherein the number of filaments in the fiber bundle used for the reinforcing fibers in the layer (A) is from 3,000 to 100,000.

**Patentansprüche**

1. Faserverstärktes Harzlaminat, umfassend die folgende Schicht (A) und die folgende Schicht (B), die miteinander laminiert sind, für die der Wert, der durch Dividieren des Gesamtbetrags der Dicke der Schicht (A) durch den Gesamtbetrag der Dicke der Schicht (B) erhalten wird, 0,5 bis 3,0 beträgt:

Schicht (A): ein Laminat, das aus einem Prepreg gebildet ist, das mit einem Harz (a) oder einer Harzzusammensetzung (a) imprägnierte Verstärkungsfasern aufweist, wobei das Produkt des Quadrats des Volumenprozentgehalts Vf der Verstärkungsfasern und der durchschnittlichen Faserlänge La (mm) mehr als 2,0 mm und 15 mm oder weniger beträgt, und
Schicht (B): eine Folie, die aus einer füllstoffhaltigen Harzzusammensetzung gebildet ist, die ein Harz (c) und einen Füllstoff einschließt, wobei das Produkt des Quadrats des Volumenprozentgehalts Vf des Füllstoffs und des Durchschnittswerts Lb (mm) der maximalen Länge des Füllstoffs 2,0 mm oder weniger beträgt.

2. Faserverstärktes Harzlaminat gemäß Anspruch 1, wobei der folgende Ausdruck (1) erfüllt ist:

$$0,85 \leq A1/B1 \leq 4,0 \ldots \quad \text{Ausdruck (1)}$$

A1: absoluter Wert der komplexen Viskosität $\eta^*$ der Schicht (A) bei einer Temperatur von (Erweichungspunkt oder Schmelzpunkt des Harzes (a), welches die Schicht (A) bildet, +40°C) und
B1: absoluter Wert der komplexen Viskosität $\eta^*$ der Schicht (B) bei einer Temperatur von (Erweichungspunkt oder Schmelzpunkt des Harzes (a), welches die Schicht (A) bildet, +40°C),

wobei die komplexe Viskosität $\eta^*$ ein Wert ist, der durch ein Parallel-Plate-Verfahren unter Verwendung eines Rotationsrheometers unter den Bedingungen eines Rotationsplattendurchmessers von 25 mm und einer Kreisfrequenz von 100 rad/s gemessen wird.

3. Faserverstärktes Harzlaminat gemäß Anspruch 1 oder 2, wobei der Wert, der durch Dividieren des Gesamtbetrags der Dicke der Schicht (A) durch den Gesamtbetrag der Dicke der Schicht (B) erhalten wird, 1,0 bis 2,0 beträgt.

4. Faserverstärktes Harzlaminat gemäß irgendeinem der Ansprüche 1 bis 3, wobei das Harz, das die Schicht (A) und/oder die Schicht (B) bildet, ein thermoplastisches Harz ist.

5. Faserverstärktes Harzlaminat gemäß irgendeinem der Ansprüche 1 bis 4, wobei das Prepreg, das die Schicht (A) bildet, Einschnitte einschließt, die jeweils eine Tiefe aufweisen, die die Verstärkungsfasern in einer Richtung zerschneiden, welche die Längenrichtung der Verstärkungsfasern durchquert.

6. Faserverstärktes Harzlaminat gemäß Anspruch 5, wobei die Einschnitte des Prepregs, das die Schicht (A) bildet, eine lineare Form aufweisen, der Winkel, der durch den Einschnitt und die Längenrichtung der Verstärkungsfasern gebildet wird, 30° bis 60° beträgt und der Gesamtbetrag der Länge der Einschnitte pro 1 m$^2$ des Prepregs 20 m bis 150 m beträgt.

7. Faserverstärktes Harzlaminat gemäß irgendeinem der Ansprüche 1 bis 6, wobei die durchschnittliche Faserlänge der Verstärkungsfasern in der Schicht (A) 10 bis 50 mm beträgt.

8. Faserverstärktes Harzlaminat gemäß irgendeinem der Ansprüche 1 bis 7, wobei eine Schicht (B) zwischen einer Schicht (A) und einer weiteren Schicht (A) laminiert ist.

9. Faserverstärktes Harzlaminat gemäß irgendeinem der Ansprüche 1 bis 8, wobei das faserverstärkte Harzlaminat durch Verschmelzen der Schicht (A) und der Schicht (B) durch Erwärmen der Schichten auf eine Temperatur, die höher oder gleich dem Erweichungspunkt oder dem Schmelzpunkt des Harzes, das die Schicht (A) bildet, und der Harzzusammensetzung, die die Schicht (B) bildet, ist, erhalten wird.

10. Faserverstärktes Harzlaminat gemäß irgendeinem der Ansprüche 1 bis 9, wobei der Volumenprozentgehalt der Verstärkungsfasern in der Schicht (A) 20 % bis 60 % beträgt.

11. Faserverstärktes Harzlaminat gemäß irgendeinem der Ansprüche 1 bis 10, wobei die Verstärkungsfasern in der Schicht (A) Kohlenstofffasern sind.

12. Faserverstärktes Harzlaminat gemäß irgendeinem der Ansprüche 1 bis 11, wobei der Füllstoff in der Schicht (B) ein Recyclingmaterial ist.

13. Faserverstärktes Harzlaminat gemäß irgendeinem der Ansprüche 1 bis 12, wobei die Verstärkungsfasern in der Schicht (A) Kohlenstofffasern mit einer durchschnittlichen Einzelfaserfeinheit von 0,5 dtex bis 2,4 dtex sind.

**14.** Faserverstärktes Harzlaminat gemäß irgendeinem der Ansprüche 1 bis 13, wobei die Anzahl der Filamente in dem Faserbündel, das für die Verstärkungsfasern in der Schicht (A) verwendet wird, 3.000 bis 100.000 beträgt.

**Revendications**

**1.** Stratifié en résine renforcé par des fibres comprenant la couche suivante (A) et la couche suivante (B) stratifiées ensemble, pour lequel la valeur obtenue par division de la somme totale de l'épaisseur de la couche (A) par la somme totale de l'épaisseur de la couche (B) est de 0,5 à 3,0 :

couche (A) : un stratifié formé à partir d'un préimprégné présentant des fibres de renfort imprégnées de résine (a) ou composition de résine (a), le produit du carré de la teneur en pourcentage de volume Vf des fibres de renfort et la longueur de fibre moyenne La (mm) étant supérieur à 2,0 mm et 15 mm ou moins ; et

couche (B) : une feuille formée à partir d'une composition de résine contenant un élément de remplissage incluant la résine (c) et un élément de remplissage, le produit du carré de la teneur en pourcentage de volume Vf de l'élément de remplissage et la valeur moyenne Lb (mm) de la longueur maximum de l'élément de remplissage étant de 2,0 mm ou moins.

**2.** Stratifié en résine renforcé par des fibres selon la revendication 1, dans lequel l'expression suivante (1) est satisfaite :

$$0,85 \leq A1/B1 \leq 4,0 \ldots \text{Expression (1)}$$

A1: valeur absolue de la viscosité complexe $\eta^*$ de la couche (A) à une température de (point de ramollissement ou point de fusion de résine (a) qui forme la couche (A) + 40 °C), et

B1: valeur absolue de la viscosité complexe $\eta^*$ de la couche (B) à une température de (point de ramollissement ou point de fusion de résine (a) qui forme la couche (A) + 40 °C),

dans lequel la viscosité complexe $\eta^*$ est une valeur mesurée par un procédé de plaque parallèle en utilisant un rhéomètre rotatif dans les conditions d'un diamètre de plaque rotative de 25 mm et une fréquence angulaire de 100 rad/s.

**3.** Stratifié en résine renforcé par des fibres selon la revendication 1 ou 2, dans lequel la valeur obtenue par division de la somme totale de l'épaisseur de la couche (A) par la somme totale de l'épaisseur de la couche (B) est de 1,0 à 2,0.

**4.** Stratifié en résine renforcé par des fibres selon l'une quelconque des revendications 1 à 3, dans lequel la résine qui constitue la couche (A) et/ou la couche (B) est une résine thermoplastique.

**5.** Stratifié en résine renforcé par des fibres selon l'une quelconque des revendications 1 à 4, dans lequel le préimprégné qui forme la couche (A) inclut des incisions présentant chacune une profondeur qui coupe les fibres de renfort dans une direction qui traverse la direction de la longueur des fibres de renfort.

**6.** Stratifié en résine renforcé par des fibres selon la revendication 5, dans lequel les incisions du préimprégné qui forme la couche (A) présentent une forme linéaire, l'angle formé par l'incision et la direction de la longueur des fibres de renfort est de 30° à 60° et la somme totale de la longueur des incisions par 1 m² du préimprégné est de 20 m à 150 m.

**7.** Stratifié en résine renforcé par des fibres selon l'une quelconque des revendications 1 à 6, dans lequel la longueur de fibre moyenne des fibres de renfort dans la couche (A) est de 10 mm à 50 mm.

**8.** Stratifié en résine renforcé par des fibres selon l'une quelconque des revendications 1 à 7, dans lequel une couche (B) est stratifiée entre une couche (A) et une autre couche (A).

**9.** Stratifié en résine renforcé par des fibres selon l'une quelconque des revendications 1 à 8, dans lequel le stratifié en résine renforcé par des fibres est obtenu par fusion de la couche (A) et la couche (B) par chauffage des couches à une température supérieure ou égale au point de ramollissement ou au point de fusion de la résine qui forme la couche (A) et la composition de résine qui forme la couche (B).

**10.** Stratifié en résine renforcé par des fibres selon l'une quelconque des revendications 1 à 9, dans lequel la teneur en pourcentage de volume des fibres de renfort dans la couche (A) est de 20 % à 60 %.

**11.** Stratifié en résine renforcé par des fibres selon l'une quelconque des revendications 1 à 10, dans lequel les fibres de renfort dans la couche (A) sont des fibres de carbone.

**12.** Stratifié en résine renforcé par des fibres selon l'une quelconque des revendications 1 à 11, dans lequel l'élément de remplissage dans la couche (B) est un matériau recyclé.

**13.** Stratifié en résine renforcé par des fibres selon l'une quelconque des revendications 1 à 12, dans lequel les fibres de renfort dans la couche (A) sont des fibres de carbone présentant une finesse de fibre unique moyenne de 0,5 dtex à 2,4 dtex.

**14.** Stratifié en résine renforcé par des fibres selon l'une quelconque des revendications 1 à 13, dans lequel le nombre de filaments dans le faisceau de fibre utilisé pour les fibres de renfort dans la couche (A) est de 3 000 à 100 000.

FIG. 1

FIG. 2

FIG. 3

FIG. 4

FIG. 5

FIG. 6

## FIG. 7

## FIG. 8

EP 3 078 486 B1

FIG. 9

FIG. 10

FIG. 11

FIG. 12

TEMPERATURE OF MOLD: 90°C

TEMPERATURE OF MOLD: 145°C

FIG. 13

FIG. 14

FIG. 15

FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013250253 A
- JP 63247012 A
- JP 63267523 A
- JP 2010018724 A
- JP 2008207544 A

- JP 2008207545 A
- JP 2009286817 A
- EP 2127840 A1
- WO 2013147257 A1
- JP 2013208725 B